# EUROPEAN PATENT APPLICATION

(11) **EP 4 765 902 A1**
(43) Date of publication of application: **24.06.2026**
(21) Application number: 24882655.4
(22) Date of filing: 13.09.2024
(51) Int. Cl.: H04W 4/80, H04N 21/436, H04N 21/4363, H04W 4/06, H04W 8/00, H04W 76/14, H04L 67/1095, H04M 1/72412, G06F 3/16

(54) **ELECTRONIC DEVICE, METHOD, AND NON-TRANSITORY COMPUTER-READABLE STORAGE MEDIUM FOR ADDITIONAL SCAN RELATED TO BROADCAST SERVICE**

(30) Priority: 26.10.2023 KR 20230144631; 01.12.2023 KR 20230172758
(71) Applicant: Samsung Electronics Co., Ltd., Suwon-si, Gyeonggi-do 16677 (KR)
(72) Inventor: JANG, Wonkyoung, Suwon-si Gyeonggi-do 16677 (KR); KIM, Sunjo, Suwon-si Gyeonggi-do 16677 (KR); KIM, Seongbok, Suwon-si Gyeonggi-do 16677 (KR); KIM, Seongji, Suwon-si Gyeonggi-do 16677 (KR); JU, Yunmi, Suwon-si Gyeonggi-do 16677 (KR)
(74) Representative: HGF
(86) International application number: PCT/KR2024/014062
(87) International publication number: WO 2025/089626

(57) **Abstract**

A first electronic device is provided. The first electronic device may operate as an audio synchronization device, and may comprise a memory for storing instructions, a communication circuit for BLE, and a processor. The instructions, when executed by the processor, may cause the first electronic device to: receive, from a second electronic device that assists the first electronic device, a signal indicating the start of a first scan regarding an advertisement from an external electronic device around the second electronic device, in order for the second electronic device to search for an audio source device that provides a broadcast service, through a communication link between the first electronic device and the second electronic device, by using the communication circuit; execute a second scan regarding an advertisement from an external electronic device around the first electronic device, in response to the signal, by using the communication circuit; and transmit information regarding the second scan's result to the second electronic device through the communication link by using the communication circuit.

## Description

### [Technical Field]

The following descriptions relate to an electronic device, a method, and a non-transitory computer-readable storage medium for an additional scan related to a broadcasting service (or broadcast service).

### [Background Art]

Compared to legacy Bluetooth^{®} (or classic Bluetooth), Bluetooth^{®} low energy (BLE) may provide reduced power consumption and provide a wide communication range between connected devices. BLE may be provided on industrial, scientific, and medical (ISM) radio band.

The above-described information may be provided as a related art for the purpose of helping to understand the present disclosure. No claim or determination is raised as to whether any of the above-described information may be applied as a prior art related to the present disclosure.

### [Disclosure]

### [Technical Solution]

A first electronic device is provided. The first electronic device may assist a second electronic device operating as an audio sink device. The first electronic device may comprise memory configured to store instructions. The first electronic device may comprise a communication circuit for Bluetooth low energy (BLE). The first electronic device may include a processor. The instructions, when executed by the processor, may cause the first electronic device to detect an input to discover an audio source device providing a broadcasting service. The instructions, when executed by the processor, may cause the first electronic device to, based on the detection, execute, by using the communication circuit, a first scan regarding an advertisement caused around the first electronic device. The instructions, when executed by the processor, may cause the first electronic device to, based on the detection, transmit, by using the communication circuit, to the second electronic device through a communication link between the first electronic device and the second electronic device, a signal causing the second electronic device to execute a second scan regarding an advertisement caused around the second electronic device. The instructions, when executed by the processor, may cause the first electronic device to, based on receiving, by using the communication circuit, from the second electronic device through the communication link, information regarding a result of the second scan executed by the second electronic device, provide feedback according to the input by using a result of the first scan executed by the first electronic device and the result of the second scan executed by the second electronic device.

A method is provided. The method may be executed in a first electronic device that assists a second electronic device operating as an audio sink device and comprises a communication circuit for BLE. The method may comprise detecting an input to discover an audio source device providing a broadcasting service. The method may comprise, based on the detection, executing, by using the communication circuit, a first scan regarding an advertisement caused around the first electronic device. The method may comprise, based on the detection, transmitting, by using the communication circuit, to the second electronic device through a communication link between the first electronic device and the second electronic device, a signal causing the second electronic device to execute a second scan regarding an advertisement caused around the second electronic device. The method may comprise, based on receiving, by using the communication circuit, from the second electronic device through the communication link, information regarding a result of the second scan executed by the second electronic device, providing feedback according to the input by using a result of the first scan executed by the first electronic device and the result of the second scan executed by the second electronic device.

A non-transitory computer-readable storage medium is provided. The non-transitory computer-readable storage medium may store one or more programs. The one or more programs may include instructions that, when executed by a first electronic device that assists a second electronic device operating as an audio sink device and comprises a communication circuit for Bluetooth low energy (BLE), cause the first electronic device to detect an input to discover an audio source device providing a broadcasting service. The one or more programs may include instructions that, when executed by the first electronic device, cause the first electronic device to, based on the detection, execute, by using the communication circuit, a first scan regarding an advertisement caused around the first electronic device. The one or more programs may include instructions that, when executed by the first electronic device, cause the first electronic device to, based on the detection, by using the communication circuit, to the second electronic device through a communication link between the first electronic device and the second electronic device, execute a second scan regarding an advertisement caused around the second electronic device. The one or more programs may include instructions that, when executed by the first electronic device, cause the first electronic device to, based on receiving, by using the communication circuit, from the second electronic device through the communication link, information regarding a result of the second scan executed by the second electronic device, provide feedback according to the input by using a result of the first scan executed by the first electronic device and the result of the second scan executed by the second electronic device.

A mobile electronic device is provided. The mobile electronic device may comprise memory storing instructions. The mobile electronic device may comprise a communication circuit for Bluetooth low energy (BLE). The mobile electronic device may include a processor. The instructions, when executed by the processor, may cause the mobile electronic device to receive a user input to discover an audio source device. The instructions, when executed by the processor, may cause the mobile electronic device to, based on the user input, transmit a signal causing an audio sink device to execute a scan regarding an advertisement from an audio source device around the audio sink device. The instructions, when executed by the processor, may cause the mobile electronic device to receive information regarding a result of the scan executed by the audio sink device. The instructions, when executed by the processor, may cause the mobile electronic device to, based on the result of the scan executed by the audio sink device, designate a device discovered according to the scan as an audio source device and transmit, to the audio sink device, a request to synchronize to a broadcast isochronous stream (BIS) from the audio source device.

A method is provided. The method may be executed in a mobile electronic device including a communication circuit for Bluetooth low energy (BLE). The method may comprise receiving a user input to discover an audio source device. The method may comprise, based on the user input, transmitting a signal causing an audio sink device to execute a scan regarding an advertisement from an audio source device around the audio sink device. The method may comprise receiving information regarding a result of the scan executed by the audio sink device. The method may comprise, based on the result of the scan executed by the audio sink device, designating a device discovered according to the scan as an audio source device. The method may comprise transmitting, to the audio sink device, a request to synchronize to a broadcast isochronous stream (BIS) from the audio source device.

A non-transitory computer-readable storage medium is provided. The non-transitory computer-readable storage medium may store one or more programs. The one or more programs may include instructions that, when executed by a mobile electronic device including a communication circuit for Bluetooth low energy (BLE), cause the mobile electronic device to receive a user input to discover an audio source device. The one or more programs may include instructions that, when executed by the mobile electronic device, cause the mobile electronic device to, based on the user input, transmit a signal causing an audio sink device to execute a scan regarding an advertisement from an audio source device around the audio sink device. The one or more programs may include instructions that, when executed by the mobile electronic device, cause the mobile electronic device to receive information regarding a result of the scan executed by the audio sink device. The one or more programs may include instructions that, when executed by the mobile electronic device, cause the mobile electronic device to, based on the result of the scan executed by the audio sink device, designate a device discovered according to the scan as an audio source device. The one or more programs may include instructions that, when executed by the mobile electronic device, cause the mobile electronic device to transmit, to the audio sink device, a request to synchronize to a broadcast isochronous stream (BIS) from the audio source device.

A first electronic device is provided. The first electronic device may operate as an audio sink device. The first electronic device may comprise memory configured to store instructions. The first electronic device may comprise a communication circuit for Bluetooth low energy (BLE). The first electronic device may comprise a processor. The instructions, when executed by the processor, may cause the first electronic device to, by using the communication circuit, receive, from a second electronic device assisting the first electronic device through a communication link between the first electronic device and the second electronic device, a signal informing a start of a first scan regarding an advertisement caused around the second electronic device to discover, by the second electronic device, an audio source device providing a broadcasting service. The instructions, when executed by the processor, may cause the first electronic device to, in response to the signal, execute, by using the communication circuit, a second scan regarding an advertisement caused around the first electronic device. The instructions, when executed by the processor, may cause the first electronic device to, by using the communication circuit, transmit, to the second electronic device through the communication link, information regarding a result of the second scan as information for determining the audio source device.

A method is provided. The method may be executed in a first electronic device operating as an audio sink device and including a communication circuit for Bluetooth low energy (BLE). The method may comprise, by using the communication circuit, receiving, from a second electronic device assisting the first electronic device through a communication link between the first electronic device and the second electronic device, a signal informing a start of a first scan regarding an advertisement caused around the second electronic device to discover, by the second electronic device, an audio source device providing a broadcasting service. The method may comprise, in response to the signal, executing, by using the communication circuit, a second scan regarding an advertisement caused around the first electronic device. The method may comprise transmitting, to the second electronic device through the communication link, information regarding a result of the second scan as information for determining the audio source device.

A non-transitory computer-readable storage medium is provided. The non-transitory computer-readable storage medium may store one or more programs. The one or more programs may include instructions that, when executed by a first electronic device operating as an audio sink device and including a communication circuit for Bluetooth low energy (BLE), cause the first electronic device to, by using the communication circuit, receive, from a second electronic device assisting the first electronic device through a communication link between the first electronic device and the second electronic device, a signal informing a start of a first scan regarding an advertisement caused around the second electronic device to discover, by the second electronic device, an audio source device providing a broadcasting service. The one or more programs may include instructions that, when executed by the first electronic device, cause the first electronic device to, in response to the signal, execute, by using the communication circuit, a second scan regarding an advertisement caused around the first electronic device. The one or more programs may include instructions that, when executed by the first electronic device, cause the first electronic device to, by using the communication circuit, transmit, to the second electronic device through the communication link, information regarding a result of the second scan as information for determining the audio source device.

### [Description of the Drawings]

FIG. 1 illustrates an example of an environment including an electronic device, a first external electronic device, and a second external electronic device.
FIG. 2 is a simplified block diagram of an exemplary first external electronic device.
FIG. 3 is a simplified block diagram of an exemplary electronic device.
FIG. 4 illustrates an exemplary method for an additional scan executed by an electronic device operating as an audio sink device.
FIG. 5 illustrates an example of an input to discover an audio source device providing a broadcasting service.
FIG. 6 illustrates an example of a method of an electronic device that defers outputting audio after synchronization to a broadcast isochronous stream (BIS).
FIGS. 7, 8, 9, 10, 11, and 12 illustrate examples of a device list displayed by using a display of a first external electronic device.
FIG. 13 illustrates an example of a method of a first external electronic device executed according to a user input received with respect to a device list.
FIG. 14 illustrates an example of a method of an electronic device that starts outputting deferred audio after synchronization to a broadcast isochronous stream (BIS) according to reception of a request.
FIG. 15 is a block diagram of an electronic device in a network environment, according to various embodiments.

### [Mode for Invention]

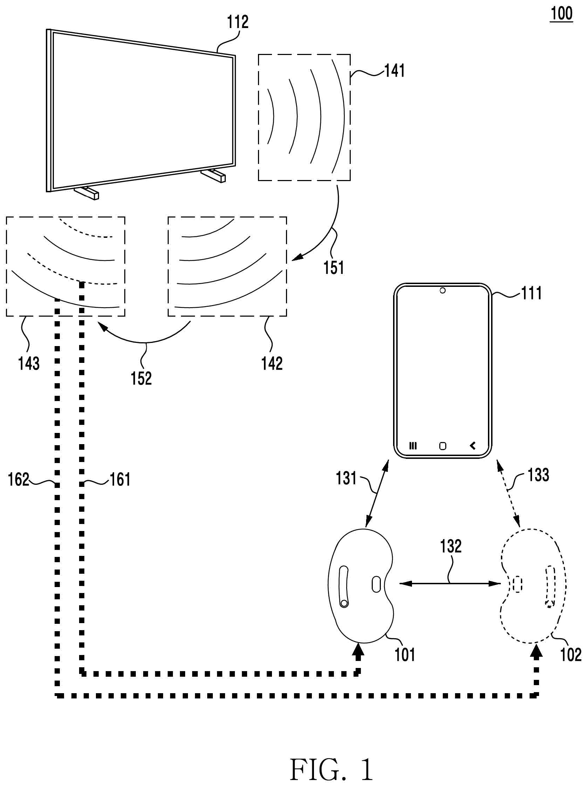

FIG. 1 illustrates an example of an environment including an electronic device, a first external electronic device, and a second external electronic device.

Referring to FIG. 1, an environment 100 may include an electronic device 101, a first external electronic device 111, and a second external electronic device 112.

The electronic device 101 in the environment 100 may provide an audio broadcasting service (or a broadcasting service), in conjunction with the first external electronic device 111. As a non-limiting example, the electronic device 101 may be configured to operate as an audio sink device in the audio broadcasting service. The first external electronic device 111 may be configured to assist the electronic device 101 operating as an audio sink device in the audio broadcasting service.

For example, the electronic device 101 may be configured to output audio. For example, the electronic device 101 may output audio based on data broadcasted from the second external electronic device 112. For example, the electronic device 101 may provide an audio broadcasting service, based on data broadcasted from the second external electronic device 112. As a non-limiting example, the second external electronic device 112 may be configured to operate as an audio source device in the audio broadcasting service.

For example, the electronic device 101 may output audio based on data for a broadcast isochronous stream (BIS) from the second external electronic device 112. For example, the audio may be broadcasted through a broadcast isochronous group (BIG). For example, the BIG may include multiple instances for the BIS. For example, an event of the BIG may include one or more BIS events. For example, each of the one or more BIS events may include one or more sub-events. For example, the audio may be outputted based on synchronizing to the BIS from the second external electronic device 112, as indicated by an arrow 161. For example, synchronizing to the BIS may indicate receiving the data for the BIS. For example, synchronizing to the BIS may be executed based on synchronizing to a periodic advertisement 142 of the second external electronic device 112.

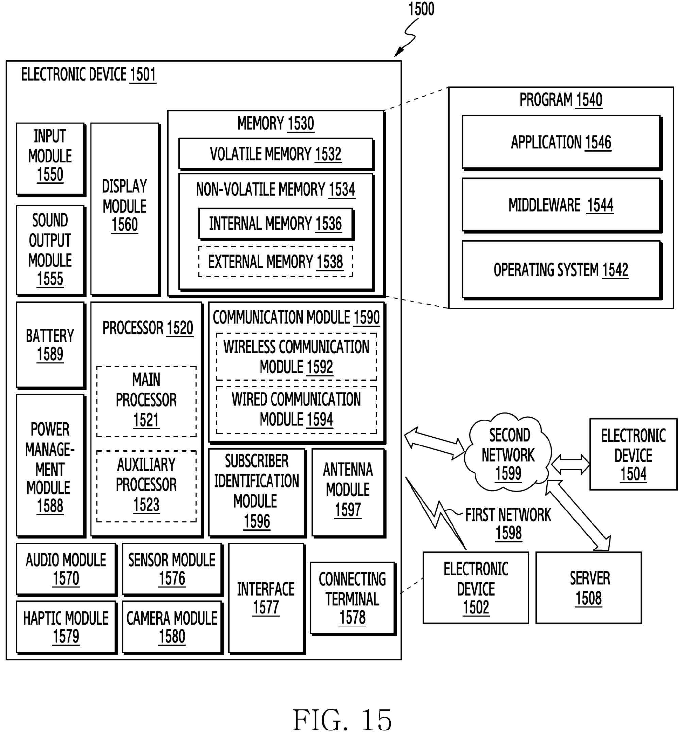

The first external electronic device 111 in the environment 100 may be used to assist the electronic device 101 in synchronizing to the BIS. As a non-limiting example, the first external electronic device 111 may be configured to operate as an assistance device (or an assistant device) of the electronic device 101 operating as an audio sink device in the audio broadcasting service. For example, the first external electronic device 111 may include at least a portion of an electronic device 1501 of FIG. 15, or may correspond to at least a portion of the electronic device 1501 of FIG. 15.

As a non-limiting example, unlike the electronic device 101, the first external electronic device 111 may include a display. For example, the first external electronic device 111 may be configured to display, on the display, a user interface for starting an audio broadcasting service (or a broadcasting service). For example, the first external electronic device 111 may be configured to display, on the display, a user interface for discovering an audio source device providing the audio broadcasting service. For example, the first external electronic device 111 may be configured to display, on the display, a user interface for visually providing one or more audio source devices discovered for the audio broadcasting service. For example, the first external electronic device 111 may be configured to display, on the display, a user interface for selecting an audio source device providing audio outputted from the electronic device 101 in the audio broadcasting service. For example, the first external electronic device 111 may be used to receive a user input for at least a portion of the user interfaces exemplified above. For example, the first external electronic device 111 may assist the electronic device 101 in synchronizing to the BIS through operations related to reception of the user input.

For example, the second external electronic device 112 may execute one or more advertisements 141 to provide the audio broadcasting service. For example, the one or more advertisements 141 may indicate a periodic advertisement 142 executed by the second external electronic device 112, as indicated by an arrow 151. For example, at least one packet advertised from the second external electronic device 112 according to the one or more advertisements 141 may include information regarding the periodic advertisement 142. For example, the first external electronic device 111 may execute a scan regarding the one or more advertisements 141, in relation to the audio broadcasting service.

For example, the second external electronic device 112 may execute the periodic advertisement 142 to provide the audio broadcasting service. For example, the periodic advertisement 142 may indicate resources for broadcasting (143) the data for the BIS, as indicated by an arrow 152. For example, at least one packet advertised from the second external electronic device 112 according to the periodic advertisement 142 may include information regarding broadcasting (143) the data for the BIS (e.g., information regarding resources for broadcasting (143) the data for the BIS). For example, the first external electronic device 111 may execute a scan regarding the periodic advertisement 142, in relation to the audio broadcasting service.

For example, the first external electronic device 111 may transmit, to the electronic device 101, information regarding a result of the scan exemplified above (e.g., information regarding the periodic advertisement 142). For example, the information may be transmitted to the electronic device 101 through a communication link 131 between the electronic device 101 and the first external electronic device 111. For example, the communication link 131 may include an asynchronous connectionless link (ACL) that is a control data link. However, it is not limited thereto. For example, the information may also be transmitted, from the first external electronic device 111 to the electronic device 101, through a device (e.g., a cradle) accommodating the electronic device 101 and charging the rechargeable battery of the electronic device 101.

The second external electronic device 112 in the environment 100 may broadcast the data for the BIS. Although not illustrated in FIG. 1, the second external electronic device 112 may execute one or more advertisements 141 to provide information for access to the data for the BIS. For example, the one or more advertisements 141 may provide information for access to the periodic advertisement 142. For example, the second external electronic device 112 may execute the periodic advertisement 142 to provide information for access to the data for the BIS. For example, the periodic advertisement 142 may provide information for access to the data for the BIS that is broadcasted from the second external electronic device 112. For example, the electronic device 101 may synchronize to the BIS by accessing the data for the BIS (or receiving the data for the BIS).

As a non-limiting example, the environment 100 may further include another electronic device 102. For example, the other electronic device 102 may be a device paired with the electronic device 101. As a non-limiting example, the electronic device 101 may be worn on a right ear of a user, and the other electronic device 102 may be worn on a left ear of the user. As a non-limiting example, the electronic device 101 paired with the other electronic device 102 may indicate that the electronic device 101 and the other electronic device 102 are configured as a set to provide an audio broadcasting service. As a non-limiting example, the electronic device 101 paired with the other electronic device 102 may indicate that the electronic device 101 and the other electronic device 102 are connected through a communication link 132. As a non-limiting example, the electronic device 101 paired with the other electronic device 102 may indicate that the electronic device 101 and the other electronic device 102 are used for stereophonic sound. For example, audio outputted through a speaker of the electronic device 101 may correspond to audio outputted through a speaker of the other electronic device 102.

For example, the other electronic device 102 may provide an audio broadcasting service in conjunction with the first external electronic device 111 and the electronic device 101. As a non-limiting example, the other electronic device 102 may be configured to operate as an audio sink device in the audio broadcasting service.

For example, the other electronic device 102 may be configured to output audio. For example, the other electronic device 102 may output audio based on data broadcasted from the second external electronic device 112. For example, the other electronic device 102 may provide an audio broadcasting service based on data broadcasted from the second external electronic device 112.

For example, the other electronic device 102 may output audio based on the data for the BIS from the second external electronic device 112. For example, the other electronic device 102 may output audio through one or more second BIS events in an event of the BIG while the electronic device 101 outputs audio through one or more first BIS events in the event of the BIG. For example, the audio outputted from the other electronic device 102 may be outputted based on synchronizing to the BIS from the second external electronic device 112, as indicated by an arrow 162. For example, synchronizing to the BIS may indicate receiving the data for the BIS. For example, synchronizing to the BIS may be executed based on synchronizing to a periodic advertisement 142 of the second external electronic device 112. As a non-limiting example, the other electronic device 102 may receive information regarding the periodic advertisement 142 from the first external electronic device 111 through a communication link 133 between the other electronic device 102 and the first external electronic device 111, to synchronize to the periodic advertisement 142 of the second external electronic device 112. For example, the communication link 133 may include an ACL that is a control data link.

As a non-limiting example, the other electronic device 102 may be configured to execute at least a portion of operations of the electronic device 101 to be exemplified below.

As a non-limiting example, since the first external electronic device 111 includes a rechargeable battery having a capacity greater (or larger) than a capacity of a rechargeable battery in the electronic device 101, it may be considered that the first external electronic device 111 executes, for the audio broadcasting service, a scan regarding one or more advertisements 141, instead of the electronic device 101. For example, executing, by the first external electronic device 111 among the electronic device 101 and the first external electronic device 111, the scan regarding the one or more advertisements 141 may cause an increase in time until an audio source device (e.g., the second external electronic device 112) suitable for a user is discovered.

For example, since the audio broadcasting service is provided by the electronic device 101 receiving data (e.g., the data for the BIS) broadcasted from the second external electronic device 112, executing, by the first external electronic device 111 among the electronic device 101 and the first external electronic device 111, the scan regarding the one or more advertisements 141 may be independent of a path through which the electronic device 101 receives the data broadcasted from the second external electronic device 112.

As exemplified above, as a non-limiting example, since executing, by the first external electronic device 111 among the electronic device 101 and the first external electronic device 111, the scan regarding the one or more advertisements 141 causes an increase in time until an audio source device is discovered and/or is independent of a path through which the electronic device 101 receives the data broadcasted from the second external electronic device 112, it may be considered that the electronic device 101 additionally executes a scan to discover an audio source device providing the audio broadcasting service.

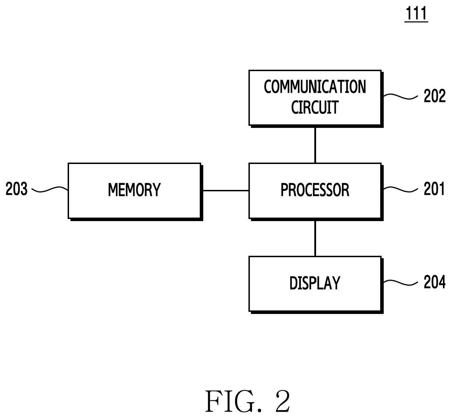

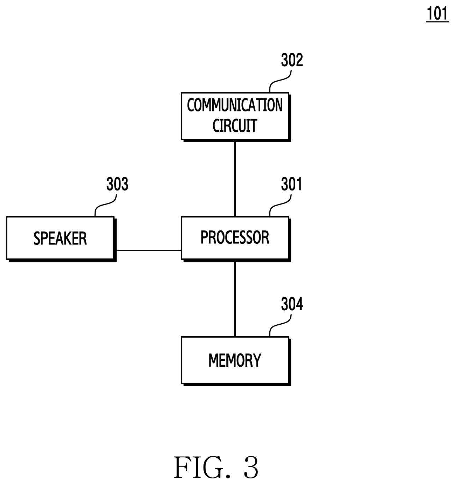

The electronic device 101 to be exemplified through the following descriptions may execute an additional scan for the audio broadcasting service. The first external electronic device 111 to be exemplified through the following descriptions may be used to cause the electronic device 101 to execute an additional scan. For example, the electronic device 101 may include components used to execute the additional scan, and the first external electronic device 111 may include components for causing the additional scan. The components of the first external electronic device 111 are exemplified in a description of FIG. 2, and the components of the electronic device 101 are exemplified in a description of FIG. 3.

FIG. 2 is a simplified block diagram of an exemplary first external electronic device.

Referring to FIG. 2, a first external electronic device 111 may include a processor 201, a communication circuit 202, memory 203, and a display 204.

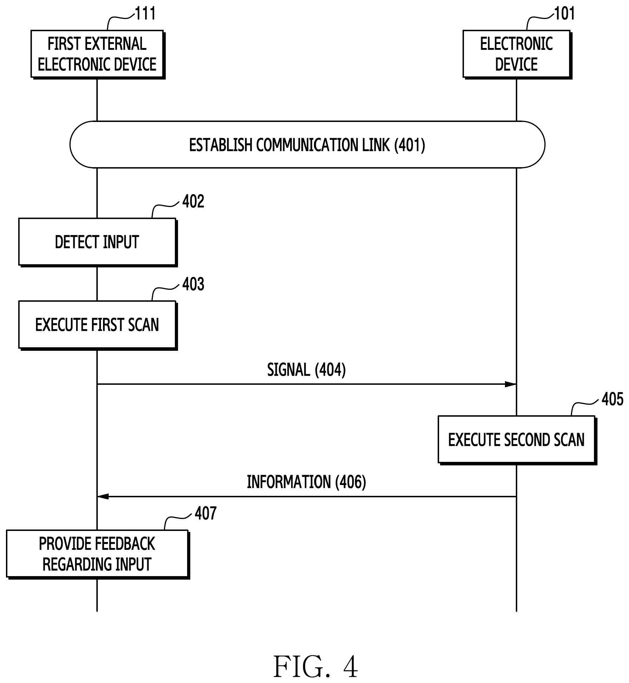

The processor 201 may include at least a portion of a processor 1520 of FIG. 15 or may correspond to at least a portion of the processor 1520 of FIG. 15. The processor 201 may be configured to control the communication circuit 202 and the display 204. The processor 201 may be configured to execute instructions stored in the memory 203 to cause the first external electronic device 111 to perform at least a portion of operations exemplified in the description of FIG. 1. The processor 201 may be configured to execute instructions stored in the memory 203 to cause the first external electronic device 111 to perform at least a portion of operations exemplified in descriptions of FIGS. 4 to 14.

The communication circuit 202 may support legacy Bluetooth and/or Bluetooth low energy (BLE). For example, the communication circuit 202 may be used for an audio broadcasting service. For example, the communication circuit 202 may be used for communication with an electronic device 101 operating as an audio sink device for an audio broadcasting service. For example, the communication circuit 202 may be used for communication with another electronic device 102 operating as an audio sink device for an audio broadcasting service. For example, the communication circuit 202 may be used for communication with a device operating as an audio source device for an audio broadcasting service, such as a second external electronic device 112.

The memory 203 may be configured to store instructions (or one or more programs storing instructions). For example, the memory 203 may include a non-volatile memory. For example, the memory 203 may include at least a portion (e.g., a non-volatile memory 1534) of memory 1530 of FIG. 15 or may correspond to at least a portion of the memory 1530 of FIG. 15.

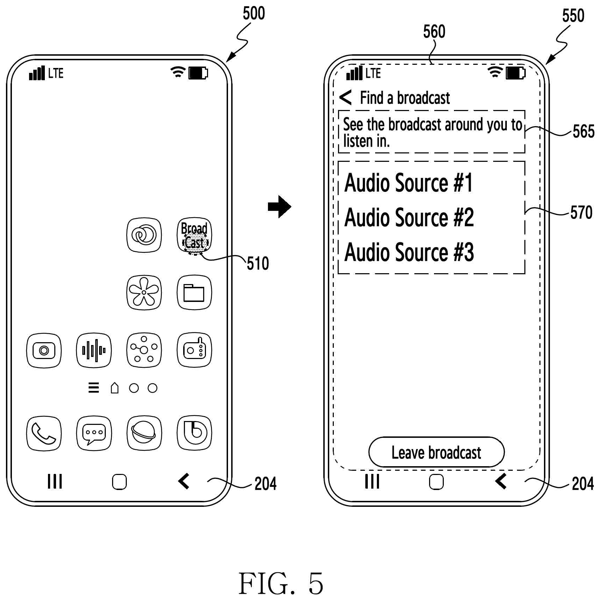

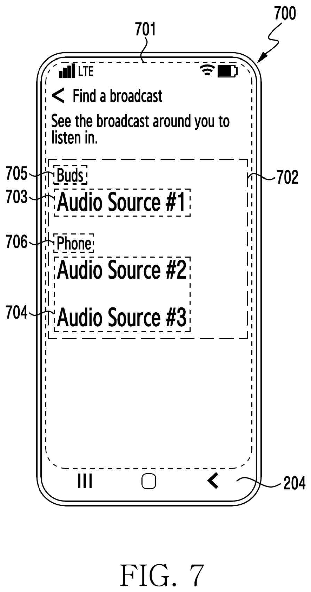

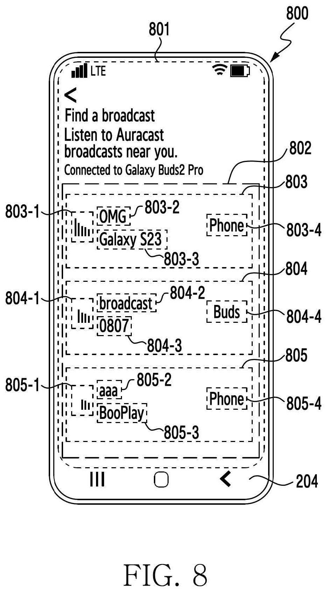

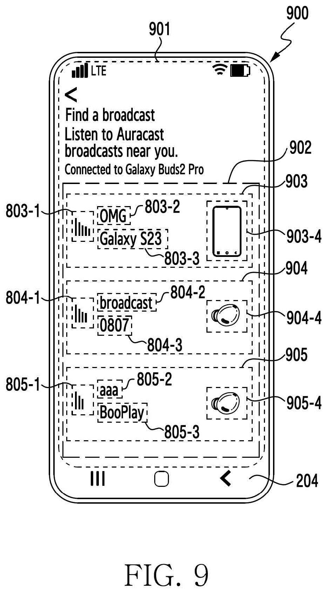

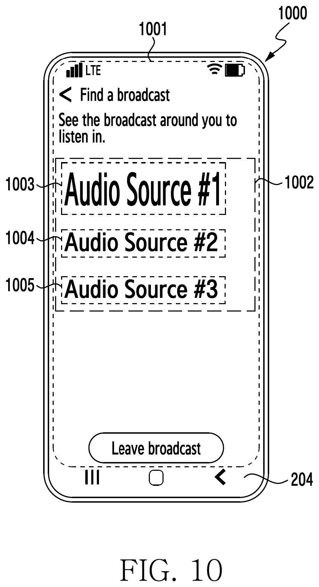

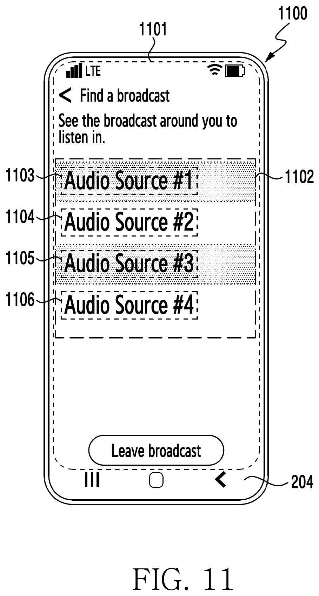

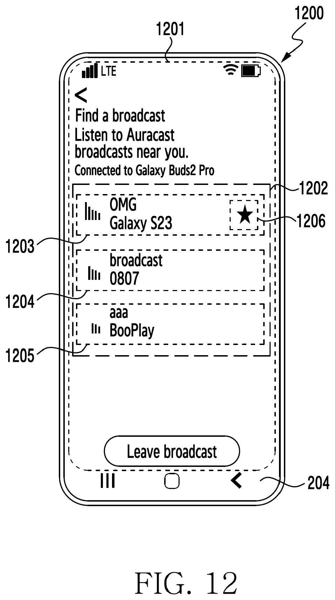

The display 204 may be configured to display visual information, visual data, an image, and/or a user interface. As a non-limiting example, the display 204 may be configured to receive an input (e.g., a touch input). For example, the display 204 may be used for an audio broadcasting service. For example, the display 204 may be used to display a user interface exemplified in the description of FIG. 1, a user interface to be exemplified in a description of FIG. 5, a user interface to be exemplified in a description of FIG. 7, a user interface to be exemplified in a description of FIG. 8, a user interface to be exemplified in a description of FIG. 9, a user interface to be exemplified in a description of FIG. 10, a user interface to be exemplified in a description of FIG. 11, and/or a user interface to be exemplified in a description of FIG. 12.

The first external electronic device 111 exemplified in the description of FIG. 2 may execute at least a portion of operations exemplified in descriptions of FIGS. 4, 5, and 7 to 13. The operations of the first external electronic device 111 to be exemplified in the descriptions of FIGS. 4, 5, and 7 to 13 may be executed, caused, or controlled by the processor 201.

FIG. 3 is a simplified block diagram of an exemplary electronic device.

Referring to FIG. 3, an electronic device 101 may include at least a portion of an electronic device 1502 of FIG. 15 or may correspond to at least a portion of the electronic device 1502 of FIG. 15. The electronic device 101 may include at least one processor 301, a communication circuit 302, a speaker 303, and memory 304.

The processor 301 may be configured to control the communication circuit 302 and the speaker 303. The processor 301 may be configured to execute instructions stored in the memory 304 to cause the electronic device 101 to perform at least a portion of operations exemplified in the description of FIG. 1. The processor 301 may be configured to execute instructions stored in the memory 304 to cause the electronic device 101 to perform at least a portion of operations exemplified in the descriptions of FIGS. 4 to 14.

The communication circuit 302 may support legacy Bluetooth and/or Bluetooth low energy (BLE). For example, the communication circuit 302 may be used for an audio broadcasting service. For example, the communication circuit 302 may be used for communication with a first external electronic device 111 operating as an assistance device for an audio broadcasting service. For example, the communication circuit 302 may be used for communication with a device operating as an audio source device for an audio broadcasting service, such as a second external electronic device 112. For example, the communication circuit 302 may be used for communication with another electronic device 102 operating as an audio sink device for an audio broadcasting service.

The speaker 303 may be configured to output audio. For example, the speaker 303 may be used for an audio broadcasting service. For example, the speaker 303 may output audio provided from the second external electronic device 112.

The memory 304 may be configured to store instructions (or one or more programs storing instructions). For example, the memory 304 may include a non-volatile memory.

The electronic device 101 exemplified in the description of FIG. 3 may execute at least a portion of operations to be exemplified in descriptions of FIGS. 4, 6, 13, and 14. The operations of the electronic device 101 to be exemplified in descriptions of FIGS. 4, 6, 13, and 14 may be executed, caused, or controlled by the processor 301.

FIG. 4 illustrates an exemplary method for an additional scan executed by an electronic device operating as an audio sink device.

Referring to FIG. 4, in operation 401, a first external electronic device 111 may establish a communication link (e.g., the communication link 131 of FIG. 1) with an electronic device 101.

As a non-limiting example, the communication link 131 may be established based on an input to a user interface displayed on a display 204 according to an advertisement of the electronic device 101. For example, the advertisement of the electronic device 101 may be executed based on an input (e.g., a user input) caused with respect to a cradle exemplified in the description of FIG. 1. For example, the advertisement of the electronic device 101 may be executed based on detecting that the electronic device 101 is gripped by a user. For example, the advertisement of the electronic device 101 may be executed based on obtaining, at the electronic device 101, power provided from the cradle.

As a non-limiting example, the communication link 131 may be established based on an input to a user interface displayed on the display 204 according to a signal (or a packet) transmitted (or broadcasted) (or advertised) from the electronic device 101 in response to an advertisement of the first external electronic device 111.

In operation 402, the first external electronic device 111 may detect an input to discover an audio source device providing a broadcasting service (or an audio broadcasting service). For example, the input may include an input received with respect to the first external electronic device 111 to output, by using the electronic device 101, audio of a broadcasting service provided from a device around the first external electronic device 111. As a non-limiting example, the input may be detected after the communication link 131 is established. As a non-limiting example, the input may be detected while the communication link 131 is maintained.

The input may be implemented in various formats. As a non-limiting example, the input may be implemented as a voice command such as "find a broadcasting service provided nearby". As a non-limiting example, the input may be implemented as receiving a signal advertised from another electronic device having a history of providing a broadcasting service to the first external electronic device 111 and the electronic device 101. As a non-limiting example, the input may be implemented as a state of the communication circuit 302 being switched from an inactive state to an active state. As a non-limiting example, the input may be implemented as receiving, from the electronic device 101, a signal requesting synchronization to a broadcast isochronous stream (BIS) according to release of synchronization to the BIS. As a non-limiting example, the input may be implemented as establishing the communication link 131. As a non-limiting example, the input may be implemented as checking that a condition of a routine set according to a user input in the first external electronic device 111 is satisfied. As a non-limiting example, the input may be implemented as a touch input on the display 204 received in relation to a software application providing a function of searching (or discovering) a broadcasting service. The input implemented as a touch input on the display 204 is exemplified in a description of FIG. 5.

FIG. 5 illustrates an example of an input to discover an audio source device providing a broadcasting service.

Referring to FIG. 5, the input may be implemented as a touch input 510 to an executable object (or icon) (or visual object) corresponding to a software application for a broadcasting service, as in a state 500. As a non-limiting example, the touch input 510 may be received to initiate executing the software application. As a non-limiting example, the touch input 510 may be received to change an execution state of the software application. For example, the touch input 510 may be received to change the execution state from a background execution state to a foreground execution state. For example, the background execution state may indicate a state in which the software application is executed while not displaying a user interface (e.g., a user interface 560) provided from the software application by using the display 204. For example, the foreground execution state may indicate a state in which the software application is executed while at least partially displaying the user interface provided from the software application by using the display 204. For example, the background execution state may indicate an execution state of the software application that is unnoticeable to a user. For example, the foreground execution state may indicate an execution state of the software application that is noticeable to a user. The above descriptions describe that the software application is a software application for a broadcasting service, but this is merely exemplary. For example, the software application may be a software application used to access another electronic device distinguished from the first external electronic device 111. For example, the software application may be a software application used to support connection-based communication with the other electronic device and non-connection-based communication with the other electronic device.

For example, the input may be implemented as an input (or a touch input) causing the first external electronic device 111 to display, by using the display 204, a user interface 560, as in the state 550. For example, the user interface 560 may be displayed to view (or watch) a broadcasting service being caused around a user, as indicated by text 565. For example, the user interface 560 may include a list 570 of an audio source device providing a broadcasting service that outputs audio. As a non-limiting example, the list 570 may include information regarding one or more external electronic devices discovered according to a scan executed by the first external electronic device 111. For example, the one or more external electronic devices may be discovered by the first external electronic device 111 (and/or the electronic device 101) before an input is detected. For example, the information may include a past discovery history. For example, the one or more external electronic devices may be discovered according to a scan executed by the first external electronic device 111 in response to the touch input 510. For example, the one or more external electronic devices may be discovered according to a scan executed by the first external electronic device 111 in response to an event (or an input) causing display of the user interface 560. However, it is not limited thereto.

Referring again to FIG. 4, in operation 403, the first external electronic device 111 may execute, based on the detection of the input, a first scan regarding an advertisement caused around the first external electronic device 111. For example, since the first external electronic device 111 is a device assisting the electronic device 101 operating as an audio sink device for a broadcasting service (or an audio broadcasting service), the first external electronic device 111 may execute the first scan in response to the detection. For example, the first external electronic device 111 may execute the first scan to transmit, to the electronic device 101 through the communication link 131, information regarding a periodic advertisement in relation to the broadcasting service to be provided through the electronic device 101.

For example, the first scan may be executed to discover an audio source device positioned around the first external electronic device 111. For example, the audio source device (e.g., the second external electronic device 112 of FIG. 1) may execute one or more advertisements (e.g., the one or more advertisements 141 of FIG. 1). For example, the one or more advertisements may include advertising at least one first packet (e.g., ADV_EXT_IND packet) on each of primary advertising channels (e.g., Ch. 37, Ch. 38, and Ch. 39). For example, the at least one first packet may indicate that additional data is provided through another (or additional) advertisement (e.g., an extended advertisement). For example, the at least one first packet may indicate at least one second packet (e.g., AUX_ADV_IND packet) (or an extended advertisement packet). For example, the first scan executed by the first external electronic device 111 may include receiving the at least one first packet.

For example, the one or more advertisements may include advertising the at least one second packet according to an extended advertisement indicated by the at least one first packet. For example, the first external electronic device 111 may receive, based on the at least one first packet received from the audio source device, the at least one second packet advertised from the audio source device on a portion of secondary advertising channels different from the primary advertising channels and indicating a periodic advertisement (e.g., the periodic advertisement 142 of FIG. 1). For example, the first external electronic device 111 may obtain, based on the at least one second packet, the information (e.g., logical link (LL)_PERIODIC_SYNC_IND) regarding the periodic advertisement. For example, the first scan executed by the first external electronic device 111 may include receiving the at least one second packet. For example, the first scan executed by the first external electronic device 111 may include obtaining, by using the at least one second packet, the information regarding the periodic advertisement.

For example, the audio source device may execute the periodic advertisement indicated by the at least one second packet. For example, the audio source device may execute the periodic advertisement by advertising at least one packet. For example, the at least one packet may include information regarding an interval of the periodic advertisement of the audio source device, information regarding an offset of a transmission according to the periodic advertisement of the audio source device, information regarding a channel map of the periodic advertisement of the audio source device, information regarding an ACL, information regarding an initial value of a cyclic redundancy check (CRC), information regarding a counter (e.g., PeriodicEventCounter) of an event of the periodic advertisement of the audio source device, and information (or advertisement data) regarding a broadcast isochronous group (BIG) (e.g., including multiple instances for a BIS from the audio source device) that is scheduled (or generated) (or obtained) by the audio source device. For example, the periodic advertisement may be used for synchronization to a BIS from the audio source device. For example, the first external electronic device 111 may receive the at least one packet. For example, the first scan executed by the first external electronic device 111 may include receiving the at least one packet advertised from the audio source device according to the periodic advertisement. For example, the first scan executed by the first external electronic device 111 may include obtaining, by using the at least one packet, information regarding a broadcasting service provided from the audio source device.

In operation 404, the first external electronic device 111 may transmit, to the electronic device 101, a signal causing the electronic device 101 to execute a second scan regarding an advertisement caused around the electronic device 101, based on the detection of the input. For example, the signal may be transmitted to the electronic device 101 through the communication link 131.

The signal may be variously implemented. For example, the signal may be transmitted, to the electronic device 101 through the communication link 131, to inform that the first external electronic device 111 starts a scan (e.g., the first scan) in relation to a broadcasting service (or an audio broadcasting service). As a non-limiting example, the signal may be transmitted through a remote scan started operation of broadcast audio scan service (BASS).

The electronic device 101 may receive the signal from the first external electronic device 111 through the communication link 131. For example, the electronic device 101 may recognize, by using the signal, that the first scan is executed (or is being executed) by the first external electronic device 111. For example, the electronic device 101 may recognize, based on the reception (and/or the recognition) of the signal, that executing the second scan is scheduled (or required). As a non-limiting example, in a case that the signal does not explicitly indicate a request to execute the second scan, the electronic device 101 may be preconfigured to execute the second scan, as in operation 405, in response to receiving the signal.

FIG. 4 illustrates executing operation 404 after executing operation 403, but this is merely exemplary. For example, the first external electronic device 111 may execute operation 403 after executing operation 404 in response to the detection. For example, the first external electronic device 111 may execute operation 403 and operation 404 simultaneously. For example, operation 403 and operation 404 may be executed on a condition of executing operation 402.

In operation 405, the electronic device 101 may execute the second scan based on the signal received in operation 404.

For example, the second scan may be executed to discover an audio source device positioned around the electronic device 101. For example, the audio source device (which may be identical to or different from an audio source device positioned around the first external electronic device 111 (e.g., the second external electronic device 112 of FIG. 1)) may execute one or more advertisements (e.g., the one or more advertisements 141 of FIG. 1). For example, the one or more advertisements may include advertising at least one first packet (e.g., ADV_EXT_IND packet) on each of primary advertising channels (e.g., Ch. 37, Ch. 38, and Ch. 39). For example, the at least one first packet may indicate that additional data is provided through another (or additional) advertisement (e.g., an extended advertisement). For example, the at least one first packet may indicate at least one second packet (e.g., AUX_ADV_IND packet) (or an extended advertisement packet). For example, the second scan executed by the electronic device 101 may include receiving the at least one first packet.

For example, the one or more advertisements may include advertising the at least one second packet according to an extended advertisement indicated by the at least one first packet. For example, the electronic device 101 may receive, based on the at least one first packet received from the audio source device, the at least one second packet advertised from the audio source device on a portion of secondary advertising channels different from the primary advertising channels and indicating a periodic advertisement (e.g., the periodic advertisement 142 of FIG. 1). For example, the electronic device 101 may obtain, based on the at least one second packet, the information (e.g., logical link (LL)_PERIODIC_SYNC_IND) regarding the periodic advertisement. For example, the second scan executed by the electronic device 101 may include receiving the at least one second packet. For example, the second scan executed by the electronic device 101 may include obtaining, by using the at least one second packet, the information regarding the periodic advertisement.

For example, the audio source device may execute the periodic advertisement indicated by the at least one second packet. For example, the audio source device may execute the periodic advertisement by advertising at least one packet. For example, the at least one packet may include information regarding an interval of the periodic advertisement of the audio source device, information regarding an offset of a transmission according to the periodic advertisement of the audio source device, information regarding a channel map of the periodic advertisement of the audio source device, information regarding an ACL, information regarding an initial value of a cyclic redundancy check (CRC), information regarding a counter (e.g., PeriodicEventCounter) of an event of the periodic advertisement of the audio source device, and information (or advertisement data) regarding a broadcast isochronous group (BIG) (e.g., including multiple instances for a BIS from the audio source device) that is scheduled (or generated) (or obtained) by the audio source device. For example, the periodic advertisement may be used for synchronization to a BIS from the audio source device. For example, the electronic device 101 may receive the at least one packet. For example, the second scan executed by the electronic device 101 may include receiving the at least one packet advertised from the audio source device according to the periodic advertisement. For example, the second scan executed by the electronic device 101 may include obtaining, by using the at least one packet, information regarding a broadcasting service provided from the audio source device.

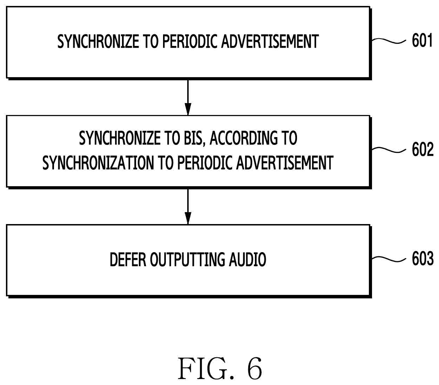

As a non-limiting example, the electronic device 101 may synchronize to a BIS from an audio source device among one or more audio source devices discovered according to a result of the second scan. For example, since the synchronization to the BIS is executed before a user input for selecting an audio source device is received by the first external electronic device 111, the electronic device 101 may defer, bypass, refrain from, disable, or skip outputting audio according to the synchronization to the BIS. Deferring output of the audio according to the synchronization to the BIS is exemplified in a description of FIG. 6.

FIG. 6 illustrates an example of a method of an electronic device that defers outputting audio after synchronization to a broadcast isochronous stream (BIS).

Referring to FIG. 6, in operation 601, the electronic device 101 may synchronize to a periodic advertisement caused around the electronic device 101 for the second scan. For example, synchronizing to the periodic advertisement may indicate receiving at least one packet (e.g., the at least one packet exemplified in the description of FIG. 4) advertised from an audio source device according to the periodic advertisement. For example, synchronizing to the periodic advertisement may indicate obtaining information regarding a BIS from the audio source device advertising the at least one packet.

In operation 602, the electronic device 101 may synchronize to the BIS according to the synchronization to the periodic advertisement. For example, synchronizing to the BIS may indicate receiving data for the BIS broadcasted from the audio source device advertising the at least one packet according to the periodic advertisement.

For example, in a case that the electronic device 101 is synchronized to a plurality of periodic advertisements according to the second scan, the electronic device 101 may select, identify, or determine an audio source device among a plurality of audio source devices respectively executing the plurality of periodic advertisements in operation 602.

As a non-limiting example, the electronic device 101 may measure reception signal strength of each of a plurality of signals (e.g., a plurality of advertising signals or a plurality of advertising packets) respectively received from the plurality of audio source devices according to the second scan, and may select, among the plurality of audio source devices, an audio source device advertising a signal having the highest reception signal strength according to the measurement. For example, the electronic device 101 may synchronize to a BIS from the selected audio source device.

As a non-limiting example, the electronic device 101 may select an audio source device among the plurality of audio source devices discovered according to the second scan, by using a usage history. For example, the electronic device 101 may select, from among the plurality of audio source devices, an audio source device that broadcasted a signal (e.g., data for a BIS) most recently received by the electronic device 101, from the usage history. For example, the electronic device 101 may synchronize to a BIS from the selected audio source device.

In operation 603, the electronic device 101 may defer outputting audio according to synchronizing to the BIS. For example, since synchronizing to the BIS is executed before a user input for selecting an audio source device providing audio to be outputted from the electronic device 101 according to a broadcasting service is received by the first external electronic device 111, the electronic device 101 may defer outputting the audio according to synchronizing to the BIS. As a non-limiting example, since synchronizing to the BIS is executed, in response to the user input, to output audio according to the broadcasting service with a fast response speed, the electronic device 101 may defer outputting the audio according to synchronizing to the BIS.

Deferring outputting audio according to synchronizing to the BIS may be variously implemented. For example, the electronic device 101 may defer outputting the audio by disabling (or refraining from) (or not executing) rendering of data for the BIS received according to the synchronization to the BIS. For example, the electronic device 101 may enable (or execute) rendering data for the BIS received according to the synchronization to the BIS, but may defer outputting the audio by controlling the speaker 303 to operate in a mute state. For example, the electronic device 101 may enable rendering data for the BIS received according to the synchronization to the BIS, but may defer outputting the audio by setting a volume of audio outputted by using the rendered data to a minimum volume (e.g., 0).

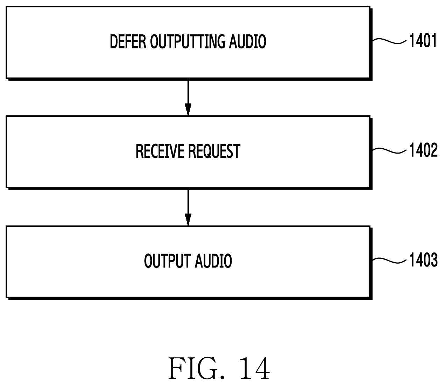

For example, deferring outputting the audio may be ceased in response to operation 1402 of FIG. 14 to be exemplified below.

Referring again to FIG. 4, in operation 406, the electronic device 101 may transmit information regarding a result of the second scan to the first external electronic device 111. For example, the information may be transmitted to the first external electronic device 111 through the communication link 131.

For example, the information may include data obtained (or recognized) (or identified) from the one or more advertisements according to the second scan. For example, the information may include data regarding an audio source device discovered according to the second scan (e.g., a name of the audio source device, a type of the audio source device), data regarding a broadcasting service provided from the audio source device discovered according to the second scan (e.g., the broadcasting service information (or program information of the broadcasting service)), and/or data regarding a BIS from the audio source device discovered according to the second scan. As a non-limiting example, the information may be transmitted through a broadcast receive state of BASS (or a characteristic behavior of the broadcast receive state).

A condition used in the electronic device 101 to transmit the information may be variously defined or set. For example, the electronic device 101 may transmit the information after executing the second scan for a reference time (or a predetermined time) (or a specified time) (or a designated time). For example, the electronic device 101 may transmit the information in a case that the second scan is completed for an audio source device. For example, the electronic device 101 may transmit the information based on the number of one or more audio source devices discovered according to the second scan reaching a reference number. For example, the electronic device 101 may transmit the information based on receiving, from the first external electronic device 111, a request to transmit the information (not illustrated in FIG. 4).

Data included in the information may be variously implemented or set.

For example, the information may include data related to an audio source device that advertises a signal (e.g., an advertising signal or an advertising packet) having a reception signal strength exceeding a reference strength. For example, the electronic device 101 may configure (or set), as the information, data obtained from at least one signal having a reception signal strength (e.g., a received signal strength indicator (RSSI)) exceeding a reference strength among signals received by the electronic device 101 according to the second scan, and may transmit the configured information. As a non-limiting example, remaining signals except for the at least one signal among the signals may be discarded.

For example, the information may include data related to N audio source devices that is a reference number (or a predetermined number) (N is a natural number of 1 or more). For example, the electronic device 101 may obtain the information including data regarding audio source devices respectively advertising top N signals having high reception signal strength (the signals received according to the second scan), and may transmit the obtained information.

The first external electronic device 111 may receive the information from the electronic device 101 through the communication link 131.

In operation 407, the first external electronic device 111 may provide feedback according to the input detected in operation 402 by using a result of the first scan executed by the first external electronic device 111 and a result of the second scan executed by the electronic device 101.

The feedback may be implemented variously. For example, the feedback may be implemented as causing the electronic device 101 to synchronize to a BIS from an audio source device among audio source devices discovered according to a result of the first scan and a result of the second scan. For example, the feedback may be implemented as displaying a device list obtained according to the result of the first scan and the result of the second scan by using the display 204. The feedback implemented as displaying the device list is exemplified in descriptions of FIGS. 7 to 12.

FIGS. 7 to 12 illustrate examples of a device list displayed by using a display of a first external electronic device.

Referring to FIG. 7, the first external electronic device 111 may display, by using the display 204, within a user interface 701 for a broadcasting service, a device list 702 obtained according to a result of the first scan and a result of the second scan, as in a state 700. The device list 702 may be configured such that a device (e.g., the electronic device 101 or the first external electronic device 111) executing a scan is distinguishable by a user. For example, an area in the device list 702 displaying one or more executable objects respectively indicating one or more audio source devices discovered by the first external electronic device 111 executing the first scan may be different from an area in the device list 702 displaying one or more executable objects respectively indicating one or more audio source devices discovered by the electronic device 101 executing the second scan, within the device list 702. For example, one or more executable objects 703 respectively indicating the one or more audio source devices discovered by the electronic device 101 according to the second scan may be positioned in the device list 702, in association with a visual object 705 (e.g., text 705) indicating a type (or a name) of the electronic device 101. For example, each of the one or more executable objects 703 may be used to execute synchronization to a BIS from an audio source device indicated by each of the one or more executable objects 703.

For example, one or more executable objects 704 respectively indicating the one or more audio source devices discovered by the first external electronic device 111 according to the first scan may be positioned in the device list 702, in association with a visual object 706 (e.g., text 706) indicating a type (or a name) of the first external electronic device 111. For example, each of the one or more executable objects 704 may be used to execute synchronization to a BIS from an audio source device indicated by each of the one or more executable objects 704.

Referring to FIG. 8, the first external electronic device 111 may display, by using the display 204, within a user interface 801 for a broadcasting service, a device list 802 obtained according to a result of the first scan and a result of the second scan, as in a state 800. A configuration of the device list 802 may be different from a configuration of the device list 702. For example, the device list 802 may include an executable object 803, an executable object 804, and an executable object 805. Each of the executable object 803, the executable object 804, and the executable object 805 may indicate an audio source device discovered according to the result of the first scan or the result of the second scan and/or a broadcasting service provided from the audio source device.

For example, the executable object 803 may include a visual object 803-1 indicating a strength of a signal received by the first external electronic device 111 from an audio source device during the first scan, a visual object 803-2 including information regarding a broadcasting service provided from an audio source device, a visual object 803-3 including information regarding an audio source device, and/or a visual object 803-4 including information regarding a device (e.g., the first external electronic device 111) executing a scan (e.g., the first scan) of an audio source device indicated by the executable object 803. For example, the executable object 803 may be used to execute synchronization to a BIS from an audio source device indicated by the executable object 803.

For example, the executable object 804 may include a visual object 804-1 indicating a strength of a signal received by the electronic device 101 from an audio source device during the second scan, a visual object 804-2 including information regarding a broadcasting service provided from an audio source device, a visual object 804-3 including information regarding an audio source device, and/or a visual object 804-4 including information regarding a device (e.g., the electronic device 101) executing a scan (e.g., the second scan) of an audio source device indicated by the executable object 804. For example, the executable object 804 may be used to execute synchronization to a BIS from an audio source device indicated by the executable object 804.

For example, the executable object 805 may include a visual object 805-1 indicating a strength of a signal received by the first external electronic device 111 from an audio source device during the first scan, a visual object 805-2 including information regarding a broadcasting service provided from an audio source device, a visual object 805-3 including information regarding an audio source device, and/or a visual object 805-4 including information regarding a device (e.g., the first external electronic device 111) executing a scan (e.g., the first scan) of an audio source device indicated by the executable object 805. For example, the executable object 805 may be used to execute synchronization to a BIS from an audio source device indicated by the executable object 805.

For example, each of the executable object 803, the executable object 804, and the executable object 805 may include a visual object 803-4, a visual object 804-4, and a visual object 805-4 that indicate, as text, a device (e.g., the electronic device 101 and/or the first external electronic device 111) discovering an audio source device represented by each of the executable object 803, the executable object 804, and the executable object 805.

Referring to FIG. 9, the first external electronic device 111 may display, by using the display 204, within a user interface 901 for a broadcasting service, a device list 902 obtained according to a result of the first scan and a result of the second scan, as in a state 900. For example, the device list 902 may include an executable object 903, an executable object 904, and an executable object 905. For example, each of the executable object 903, the executable object 904, and the executable object 905 may respectively include a visual object 903-4, a visual object 904-4, and a visual object 905-4 that replace a visual object 803-4, a visual object 804-4, and a visual object 805-4 respectively included in the executable object 803, the executable object 804, and the executable object 805. For example, each of the visual object 903-4, the visual object 904-4, and the visual object 905-4 may graphically represent a shape of a device discovering an audio source device indicated by the executable object 903, the executable object 904, and the executable object 905.

Referring to FIG. 10, the first external electronic device 111 may display, by using the display 204, within a user interface 1001 for a broadcasting service, a device list 1002 obtained according to a result of the first scan and a result of the second scan, as in a state 1000. The device list 1002 may include executable objects respectively indicating audio source devices. For example, an arrangement of the executable objects in the device list 1002 may be determined according to a priority of each of the audio source devices (and/or broadcasting services provided by the audio source devices). For example, a size of each of the executable objects in the device list 1002 may be determined according to a priority of each of the audio source devices (and/or broadcasting services provided by the audio source devices).

For example, the device list 1002 may include an executable object 1003, an executable object 1004, and an executable object 1005. For example, an executable object 1003 indicating an audio source device having the highest priority (or a broadcasting service having the highest priority) may be closer to a top of the user interface 1001 than the executable object 1004 and the executable object 1005. For example, a size of the executable object 1003 indicating an audio source device having the highest priority (or a broadcasting service having the highest priority) may be larger than a size of each of the executable object 1004 and the executable object 1005.

For example, criteria for determining (or identifying) (or defining) a priority of audio source devices discovered according to the first scan and the second scan (and/or a priority of audio services provided by the audio source devices) may be variously set. For example, the priority may be determined according to a strength of a signal received from each of the audio source devices. For example, the priority may be determined according to an order in which signals are respectively received from the audio source devices. For example, the priority may be determined according to whether there is a history in which signals were respectively received from the audio source devices. For example, the priority may be determined according to whether a device discovering each of the audio source devices is the electronic device 101 or the first external electronic device 111. However, it is not limited thereto.

Referring to FIG. 11, the first external electronic device 111 may display, by using the display 204, within a user interface 1101 for a broadcasting service, a device list 1102 obtained according to a result of the first scan and a result of the second scan, as in a state 1100. One or more executable objects respectively indicating one or more audio source devices discovered by the electronic device 101 among executable objects in the device list 1102 may be visually highlighted with respect to one or more other executable objects respectively indicating one or more other audio source devices discovered by the first external electronic device 111 among the executable objects in the device list 1102.

For example, the device list 1102 may include an executable object 1103 indicating an audio source device discovered by the electronic device 101 (or both the electronic device 101 and the first external electronic device 111), an executable object 1104 indicating an audio source device discovered by the first external electronic device 111 among the electronic device 101 and the first external electronic device 111, an executable object 1105 indicating an audio source device discovered by the electronic device 101 (or both the electronic device 101 and the first external electronic device 111), and an executable object 1106 indicating an audio source device discovered by the first external electronic device 111 among the electronic device 101 and the first external electronic device 111. For example, the executable object 1103 and the executable object 1105 respectively indicating audio source devices discovered by the electronic device 101 may be visually highlighted with respect to the executable object 1104 and the executable object 1106 respectively indicating audio source devices not discovered by the electronic device 101 (or discovered only by the first external electronic device 111). For example, the executable object 1103 and the executable object 1105 may have a visual effect unlike the executable object 1104 and the executable object 1106.

As a non-limiting example, an order in which the executable object 1103, the executable object 1104, the executable object 1105, and the executable object 1106 are displayed in the device list 1102 may be determined based on the priority exemplified in the description of FIG. 10.

Referring to FIG. 12, the first external electronic device 111 may display, by using the display 204, within a user interface 1201 for a broadcasting service, a device list 1202 obtained according to a result of the first scan and a result of the second scan, as in a state 1200. An executable object having the highest priority among executable objects in the device list 1202 respectively indicating audio source devices may further include a visual element than remaining executable objects among the executable objects in the device list 1202 respectively indicating the audio source devices.

For example, the device list 1202 may include an executable object 1203, an executable object 1204, and an executable object 1205. For example, a priority of an audio source device (or a broadcasting service) indicated by the executable object 1203 may be higher than a priority of an audio source device (or a broadcasting service) indicated by the executable object 1204 and a priority of an audio source device (or a broadcasting service) indicated by the executable object 1205. For example, the executable object 1203 may further include a visual element 1206 to indicate an audio source device (or a broadcasting service) having the highest priority.

Referring again to FIG. 4, the first external electronic device 111 may assist a broadcasting service to be provided by using the electronic device 101, by providing the feedback according to the input detected in operation 402, according to operation 407. For example, the first external electronic device 111 may provide the feedback by displaying a device list. For example, the first external electronic device 111 may obtain first data regarding reception signal strength measured by the first external electronic device 111 according to the first scan, and may obtain, from the information received from the electronic device 101 (e.g., the information in operation 406), second data regarding reception signal strength measured by the electronic device 101 according to the second scan. For example, the first external electronic device 111 may obtain the device list by using the first data and the second data, and may display the device list as in FIGS. 7 to 12.

For example, since methods described in the description of FIG. 4 and the descriptions of FIGS. 5 to 12 associated with the description of FIG. 4 include not only a scan of the first external electronic device 111 but also a scan of the electronic device 101 (e.g., operation 405 of FIG. 4), the electronic device 101 and the first external electronic device 111 may provide a search for a broadcasting service having diversity. For example, since the broadcasting service is provided according to the electronic device 101 synchronizing to a BIS from an audio source device, a scan of the electronic device 101 may be more suitable for a wireless environment for the broadcasting service than a scan of the first external electronic device 111. For example, the methods may provide an enhanced broadcasting service.

As described above, the first external electronic device 111 may receive a user input to discover an audio source device, transmit, based on the user input, a signal causing an audio sink device to execute a scan regarding an advertisement from an audio source device around (or positioned near) the audio sink device, receive information regarding a result of the scan executed by the audio sink device, designate, based on the result of the scan executed by the audio sink device, a device discovered according to the scan as an audio source device, and transmit, to the audio sink device, a request to synchronize to a broadcast isochronous stream (BIS) from the audio source device.

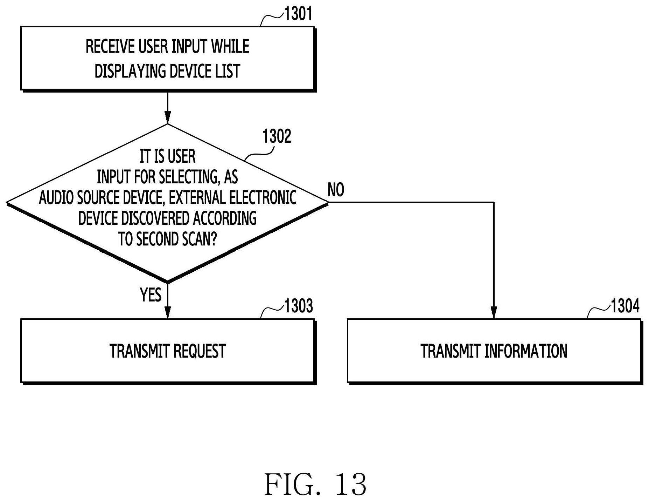

For example, the first external electronic device 111 may receive a user input after providing the feedback according to operation 407. As a non-limiting example, the user input may be received to select a broadcasting service among audio source devices (or broadcasting services) indicated through the device list exemplified above. An operation according to the user input is exemplified in a description of FIG. 13.

FIG. 13 illustrates an example of a method of a first external electronic device executed according to a user input received with respect to a device list.

Referring to FIG. 13, in operation 1301, the first external electronic device 111 may receive a user input while displaying, as the feedback according to operation 407, a device list (e.g., one of device lists exemplified in FIGS. 7 to 12). For example, the user input may include a touch input on an executable object among executable objects (e.g., executable objects exemplified in the descriptions of FIGS. 7 to 12) in the device list respectively indicating audio source devices discovered according to the first scan and the second scan. For example, the user input may be received to select an audio source device among audio source devices discovered according to the first scan and the second scan.

In operation 1302, the first external electronic device 111 may identify whether the user input received in operation 1301 is a user input for selecting, as an audio source device of a broadcasting service to be provided through the electronic device 101, an external electronic device discovered according to the second scan, or a user input for selecting, as the audio source device, another external electronic device not discovered according to the second scan (or discovered only according to the first scan). For example, when the user input indicates the external electronic device discovered according to the second scan (or both the first scan and the second scan), the first external electronic device 111 may execute operation 1303. For example, when the user input indicates the other external electronic device not discovered according to the second scan (or discovered only according to the first scan), the first external electronic device 111 may execute operation 1304.

Operation 1302 is included in FIG. 13 to indicate that operation 1303 or operation 1304 may be executed according to the user input received in operation 1301. Operation 1302 may be changed variously.

In operation 1303, the first external electronic device 111 may transmit, to the electronic device 101 through the communication link 131, a request to synchronize to a BIS from the external electronic device, based on receiving, in operation 1301, a user input for determining, as the audio source device, the external electronic device discovered according to the second scan (or discovered according to both the first scan and the second scan). For example, since the electronic device 101 has executed synchronization to a periodic advertisement of the external electronic device according to the second scan (operation 405 of FIG. 4) performed (or executed) before operation 1301, the first external electronic device 111 may transmit the request. For example, the first external electronic device 111 may transmit the request instead of information regarding the periodic advertisement of the external electronic device. As a non-limiting example, the request may be transmitted through an add source operation of BASS.

For example, the electronic device 101 may output audio for a broadcasting service based on receiving, in operation 1303, the request transmitted from the first external electronic device 111. For example, the electronic device 101 may provide the broadcasting service by outputting the audio based on synchronization to a BIS from the external electronic device after the request is received. As a non-limiting example, the synchronization to the BIS from the external electronic device may be executed before the request is transmitted from the first external electronic device 111 in operation 1303, as exemplified in the description of FIG. 6. Outputting audio according to the synchronization to the BIS executed before the request is transmitted from the first external electronic device 111 in operation 1303 will be exemplified in a description of FIG. 14.

In operation 1304, the first external electronic device 111 may transmit, to the electronic device 101 through the communication link 131, information regarding a periodic advertisement of the other external electronic device, based on receiving, in operation 1301, a user input for determining, as the audio source device, the other external electronic device that is not discovered according to the second scan and is discovered according to the first scan among the first scan and the second scan. For example, since the other external electronic device is a device not discovered according to the second scan executed by the electronic device 101, the first external electronic device 111 may transmit the information regarding a periodic advertisement of the other external electronic device. For example, the information regarding a periodic advertisement of the other external electronic device may indicate an interval of a periodic advertisement of the other external electronic device, a hopping sequence of a periodic advertisement of the other external electronic device, and/or an access address for synchronizing to a BIS from the other external electronic device. As a non-limiting example, the information may be transmitted through an add source operation of BASS.

For example, the electronic device 101 may synchronize to the periodic advertisement of the other external electronic device, based on receiving, in operation 1304, the information transmitted from the first external electronic device 111. For example, the electronic device 101 may synchronize to a BIS from the other external electronic device, based on the synchronization to the periodic advertisement of the other external electronic device. For example, the electronic device 101 may provide a broadcasting service by outputting audio based on synchronizing to the BIS from the other external electronic device.

As described above, as a non-limiting example, the electronic device 101 may synchronize to a BIS from an audio source device (e.g., the external electronic device in the description of FIG. 13) before operation 1303 is executed to provide a fast response speed for a broadcasting service (e.g., operation 602). For example, the electronic device 101 may maintain the synchronization to the BIS from the audio source device until the request transmitted from the first external electronic device 111 in operation 1303 is received. For example, the electronic device 101 may receive the request from the first external electronic device 111 while maintaining the synchronization to the BIS from the audio source device. An operation according to the request received while maintaining the synchronization to the BIS from the audio source device is exemplified in a description of FIG. 14.

FIG. 14 illustrates an example of a method of an electronic device that starts outputting deferred audio after synchronization to a broadcast isochronous stream (BIS) according to reception of a request.

Referring to FIG. 14, in operation 1401, the electronic device 101 may defer outputting audio according to synchronization to the BIS from the audio source device. For example, operation 1401 may correspond to operation 603 of FIG. 6.

In operation 1402, the electronic device 101 may receive the request transmitted from the first external electronic device 111 in operation 1303 of FIG. 13.

In operation 1403, the electronic device 101 may output, based on identifying (or determining) that the request is related to the audio source device providing a BIS synchronized by the electronic device 101, audio according to the synchronization to the BIS from the audio source device maintained before the request is received. For example, the electronic device 101 may output the audio by enabling (or executing) rendering data for the BIS received according to the synchronization to the BIS, based on the reception of the request. For example, the electronic device 101 may output the audio by controlling the speaker 303 to release a mute state based on the reception of the request. For example, the electronic device 101 may output, based on the reception of the request, the audio by changing a volume of audio outputted by using the rendered data to a volume according to a system setting.

As described above, the electronic device 101 may provide a broadcasting service with a fast response speed, by using the synchronization to the BIS executed before the request is received.

The operations of the electronic device 101 and the first external electronic device 111 exemplified above may be executed by the electronic device 1501 and the electronic device 1502 exemplified in a description of FIG. 15.

FIG. 15 is a block diagram illustrating an electronic device 1501 in a network environment 1500 according to various embodiments. Referring to FIG. 15, the electronic device 1501 in the network environment 1500 may communicate with an electronic device 1502 via a first network 1598 (e.g., a short-range wireless communication network), or at least one of an electronic device 1504 or a server 1508 via a second network 1599 (e.g., a long-range wireless communication network). According to an embodiment, the electronic device 1501 may communicate with the electronic device 1504 via the server 1508. According to an embodiment, the electronic device 1501 may include a processor 1520, memory 1530, an input module 1550, a sound output module 1555, a display module 1560, an audio module 1570, a sensor module 1576, an interface 1577, a connecting terminal 1578, a haptic module 1579, a camera module 1580, a power management module 1588, a battery 1589, a communication module 1590, a subscriber identification module(SIM) 1596, or an antenna module 1597. In some embodiments, at least one of the components (e.g., the connecting terminal 1578) may be omitted from the electronic device 1501, or one or more other components may be added in the electronic device 1501. In some embodiments, some of the components (e.g., the sensor module 1576, the camera module 1580, or the antenna module 1597) may be implemented as a single component (e.g., the display module 1560).

The processor 1520 may execute, for example, software (e.g., a program 1540) to control at least one other component (e.g., a hardware or software component) of the electronic device 1501 coupled with the processor 1520, and may perform various data processing or computation. According to an embodiment, as at least part of the data processing or computation, the processor 1520 may store a command or data received from another component (e.g., the sensor module 1576 or the communication module 1590) in volatile memory 1532, process the command or the data stored in the volatile memory 1532, and store resulting data in non-volatile memory 1534. According to an embodiment, the processor 1520 may include a main processor 1521 (e.g., a central processing unit (CPU) or an application processor (AP)), or an auxiliary processor 1523 (e.g., a graphics processing unit (GPU), a neural processing unit (NPU), an image signal processor (ISP), a sensor hub processor, or a communication processor (CP)) that is operable independently from, or in conjunction with, the main processor 1521. For example, when the electronic device 1501 includes the main processor 1521 and the auxiliary processor 1523, the auxiliary processor 1523 may be adapted to consume less power than the main processor 1521, or to be specific to a specified function. The auxiliary processor 1523 may be implemented as separate from, or as part of the main processor 1521.

The auxiliary processor 1523 may control at least some of functions or states related to at least one component (e.g., the display module 1560, the sensor module 1576, or the communication module 1590) among the components of the electronic device 1501, instead of the main processor 1521 while the main processor 1521 is in an inactive (e.g., sleep) state, or together with the main processor 1521 while the main processor 1521 is in an active state (e.g., executing an application). According to an embodiment, the auxiliary processor 1523 (e.g., an image signal processor or a communication processor) may be implemented as part of another component (e.g., the camera module 1580 or the communication module 1590) functionally related to the auxiliary processor 1523. According to an embodiment, the auxiliary processor 1523 (e.g., the neural processing unit) may include a hardware structure specified for artificial intelligence model processing. An artificial intelligence model may be generated by machine learning. Such learning may be performed, e.g., by the electronic device 1501 where the artificial intelligence is performed or via a separate server (e.g., the server 1508). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted Boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 1530 may store various data used by at least one component (e.g., the processor 1520 or the sensor module 1576) of the electronic device 1501. The various data may include, for example, software (e.g., the program 1540) and input data or output data for a command related thereto. The memory 1530 may include the volatile memory 1532 or the non-volatile memory 1534.

The program 1540 may be stored in the memory 1530 as software, and may include, for example, an operating system (OS) 1542, middleware 1544, or an application 1546.

The input module 1550 may receive a command or data to be used by another component (e.g., the processor 1520) of the electronic device 1501, from the outside (e.g., a user) of the electronic device 1501. The input module 1550 may include, for example, a microphone, a mouse, a keyboard, a key (e.g., a button), or a digital pen (e.g., a stylus pen).

The sound output module 1555 may output sound signals to the outside of the electronic device 1501. The sound output module 1555 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 1560 may visually provide information to the outside (e.g., a user) of the electronic device 1501. The display module 1560 may include, for example, a display, a hologram device, or a projector and control circuitry to control a corresponding one of the display, hologram device, and projector. According to an embodiment, the display module 1560 may include a touch sensor adapted to detect a touch, or a pressure sensor adapted to measure the intensity of force incurred by the touch.

The audio module 1570 may convert a sound into an electrical signal and vice versa. According to an embodiment, the audio module 1570 may obtain the sound via the input module 1550, or output the sound via the sound output module 1555 or a headphone of an external electronic device (e.g., an electronic device 1502) directly (e.g., wiredly) or wirelessly coupled with the electronic device 1501.

The sensor module 1576 may detect an operational state (e.g., power or temperature) of the electronic device 1501 or an environmental state (e.g., a state of a user) external to the electronic device 1501, and then generate an electrical signal or data value corresponding to the detected state. According to an embodiment, the sensor module 1576 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 1577 may support one or more specified protocols to be used for the electronic device 1501 to be coupled with the external electronic device (e.g., the electronic device 1502) directly (e.g., wiredly) or wirelessly. According to an embodiment, the interface 1577 may include, for example, a high definition multimedia interface (HDMI), a universal serial bus (USB) interface, a secure digital (SD) card interface, or an audio interface.

A connecting terminal 1578 may include a connector via which the electronic device 1501 may be physically connected with the external electronic device (e.g., the electronic device 1502). According to an embodiment, the connecting terminal 1578 may include, for example, an HDMI connector, a USB connector, an SD card connector, or an audio connector (e.g., a headphone connector).

The haptic module 1579 may convert an electrical signal into a mechanical stimulus (e.g., a vibration or a movement) or electrical stimulus which may be recognized by a user via his tactile sensation or kinesthetic sensation. According to an embodiment, the haptic module 1579 may include, for example, a motor, a piezoelectric element, or an electric stimulator.

The camera module 1580 may capture a still image or moving images. According to an embodiment, the camera module 1580 may include one or more lenses, image sensors, image signal processors, or flashes.

The power management module 1588 may manage power supplied to the electronic device 1501. According to an embodiment, the power management module 1588 may be implemented as at least part of, for example, a power management integrated circuit (PMIC).

The battery 1589 may supply power to at least one component of the electronic device 1501. According to an embodiment, the battery 1589 may include, for example, a primary cell which is not rechargeable, a secondary cell which is rechargeable, or a fuel cell.

The communication module 1590 may support establishing a direct (e.g., wired) communication channel or a wireless communication channel between the electronic device 1501 and the external electronic device (e.g., the electronic device 1502, the electronic device 1504, or the server 1508) and performing communication via the established communication channel. The communication module 1590 may include one or more communication processors that are operable independently from the processor 1520 (e.g., the application processor (AP)) and supports a direct (e.g., wired) communication or a wireless communication. According to an embodiment, the communication module 1590 may include a wireless communication module 1592 (e.g., a cellular communication module, a short-range wireless communication module, or a global navigation satellite system (GNSS) communication module) or a wired communication module 1594 (e.g., a local area network (LAN) communication module or a power line communication (PLC) module). A corresponding one of these communication modules may communicate with the external electronic device via the first network 1598 (e.g., a short-range communication network, such as Bluetooth^{™}, wireless-fidelity (Wi-Fi) direct, or infrared data association (IrDA)) or the second network 1599 (e.g., a long-range communication network, such as a legacy cellular network, a 5G network, a next-generation communication network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 1592 may identify and authenticate the electronic device 1501 in a communication network, such as the first network 1598 or the second network 1599, using subscriber information (e.g., international mobile subscriber identity (IMSI)) stored in the subscriber identification module 1596.

The wireless communication module 1592 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 1592 may support a high-frequency band (e.g., the mmWave band) to achieve, e.g., a high data transmission rate. The wireless communication module 1592 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 1592 may support various requirements specified in the electronic device 1501, an external electronic device (e.g., the electronic device 1504), or a network system (e.g., the second network 1599). According to an embodiment, the wireless communication module 1592 may support a peak data rate (e.g., 20Gbps or more) for implementing eMBB, loss coverage (e.g., 1564dB or less) for implementing mMTC, or U-plane latency (e.g., 0.5ms or less for each of downlink (DL) and uplink (UL), or a round trip of 15ms or less) for implementing URLLC.

The antenna module 1597 may transmit or receive a signal or power to or from the outside (e.g., the external electronic device) of the electronic device 1501. According to an embodiment, the antenna module 1597 may include an antenna including a radiating element composed of a conductive material or a conductive pattern formed in or on a substrate (e.g., a printed circuit board (PCB)). According to an embodiment, the antenna module 1597 may include a plurality of antennas (e.g., array antennas). In such a case, at least one antenna appropriate for a communication scheme used in the communication network, such as the first network 1598 or the second network 1599, may be selected, for example, by the communication module 1590 (e.g., the wireless communication module 1592) from the plurality of antennas. The signal or the power may then be transmitted or received between the communication module 1590 and the external electronic device via the selected at least one antenna. According to an embodiment, another component (e.g., a radio frequency integrated circuit (RFIC)) other than the radiating element may be additionally formed as part of the antenna module 1597.

According to various embodiments, the antenna module 1597 may form a mmWave antenna module. According to an embodiment, the mmWave antenna module may include a printed circuit board, an RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 1501 and the external electronic device 1504 via the server 1508 coupled with the second network 1599. Each of the electronic devices 1502 or 1504 may be a device of a same type as, or a different type, from the electronic device 1501. According to an embodiment, all or some of operations to be executed at the electronic device 1501 may be executed at one or more of the external electronic devices 1502, 1504, or 1508. For example, if the electronic device 1501 should perform a function or a service automatically, or in response to a request from a user or another device, the electronic device 1501, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 1501. The electronic device 1501 may provide the outcome, with or without further processing of the outcome, as at least part of a reply to the request. To that end, a cloud computing, distributed computing, mobile edge computing (MEC), or client-server computing technology may be used, for example. The electronic device 1501 may provide ultra low-latency services using, e.g., distributed computing or mobile edge computing. In another embodiment, the external electronic device 1504 may include an internet-of-things (IoT) device. The server 1508 may be an intelligent server using machine learning and/or a neural network. According to an embodiment, the external electronic device 1504 or the server 1508 may be included in the second network 1599. The electronic device 1501 may be applied to intelligent services (e.g., smart home, smart city, smart car, or healthcare) based on 5G communication technology or IoT-related technology.

As described above, a first electronic device (e.g., the first external electronic device 111) assisting a second electronic device (e.g., the electronic device 101) operating as an audio sink device may comprise memory (e.g., the memory 203) storing instructions, a display, a communication circuit (e.g., the communication circuit 202) for Bluetooth low energy (BLE), and a processor (e.g., the processor 201). The instructions, when executed by the processor, may cause the first electronic device to establish, using the communication circuit, a communication link between the first electronic device and a second electronic device, receive an input to discover an audio source device that provides a broadcasting service, based on the input, execute, using the communication circuit, a first scan regarding an advertisement from an external electronic device around the first electronic device, and transmit, through the communication link to the second electronic device, by using the communication circuit, a signal that causes the second electronic device to execute a second scan regarding an advertisement from an external electronic device around the second electronic device, receive, through the communication link from the second electronic device, by using the communication circuit, information regarding a result of the second scan executed by the second electronic device, and display, one the display, a user interface including a device list obtained in accordance with a result of the first scan that is executed by the first electronic device and the result of the second scan that is executed by the second electronic device.

For example, the instructions, when executed by the processor, may cause the first electronic device to receive a user input while displaying the device list by using the display, and, based on receiving the user input for selecting as the audio source device an external electronic device in the device list that is discovered according to the second scan, transmit, by using the communication circuit, a request to synchronize to a broadcast isochronous stream (BIS) from the external electronic device that is selected by the user input, through the communication link to the second electronic device.

For example, the instructions, when executed by the processor, may cause the first electronic device to, based on receiving the user input for selecting as the audio source device another external electronic device in the device list that is not discovered according to the second scan and is discovered according to the first scan, transmit, by using the communication circuit, information regarding a periodic advertisement of the other external electronic device obtained according to the first scan, through the communication link to the second electronic device.

For example, the information regarding the periodic advertisement of the other external electronic device may be transmitted through an add source operation of broadcast audio scan service (BASS).

For example, the request to synchronize to the BIS from the external electronic device that is selected based on the user input may be transmitted through an add source operation of broadcast audio scan service (BASS).

For example, the instructions, when executed by the processor, may cause the first electronic device to display the device list in the user interface that includes at least one first executable object corresponding to at least one first external electronic device not discovered according to the second scan and discovered according to the first scan and at least one second executable object corresponding to at least one second external electronic device discovered according to the second scan. The at least one second executable object may be visually highlighted with respect to the at least one first executable object, in the device list.

For example, the instructions, when executed by the processor, may cause the first electronic device to obtain first data regarding reception signal strength measured by the first electronic device according to the first scan, obtain, from the information received from the second electronic device, second data regarding reception signal strength measured by the second electronic device according to the second scan, and obtain the device list by using the first data and the second data. For example, the first data and the second data may be used for determining an executable object visually highlighted in the device list displayed by using the display.

For example, the signal may be transmitted through a remote scan started operation of broadcast audio scan service (BASS).

For example, the information may be received through a broadcast receive state of broadcast audio scan service (BASS).

As described above, a first electronic device (e.g., the electronic device 101) operating as an audio sink device may include memory (e.g., the memory 304) storing instructions, a communication circuit (e.g., the communication circuit 302) for Bluetooth low energy (BLE), and a processor (e.g., the processor 301). The instructions, when executed by the processor, may cause the first electronic device to establish, by using the communication circuit, a communication link between the first electronic device and a second electronic device assisting the first electronic device, receive, from the second electronic device assisting the first electronic device through the communication link between the first electronic device and the second electronic device, by using the communication circuit, a signal informing a start of a first scan regarding an advertisement from an external electronic device around the second electronic device to discover, by the second electronic device, an audio source device providing a broadcasting service, in response to the signal, execute, by using the communication circuit, a second scan regarding an advertisement from an external electronic device around the first electronic device, and transmit information regarding a result of the second scan, by using the communication circuit through the communication link to the second electronic device.

For example, the instructions, when executed by the processor, may cause the first electronic device to, in response to the signal, recognize that the first scan is being executed by the second electronic device.

For example, the signal may be received through a remote scan started operation of broadcast audio scan service (BASS).

For example, the information regarding the result of the second scan may be transmitted through a broadcast receive state of broadcast audio scan service (BASS).

For example, the instructions, may cause the first electronic device to receive information regarding a periodic advertisement of an external electronic device that is not discovered according to the second scan and is discovered according to the first scan, through the communication link from the second electronic device by using the communication circuit.

For example, the information regarding the periodic advertisement of the external electronic device may be received through an add source operation of broadcast audio scan service (BASS).

For example, the instructions, when executed by the processor, may cause the first electronic device to receive, by using the communication circuit, from the second electronic device through the communication link, a request to synchronize to a BIS from an external electronic device discovered according to the second scan, and, in response to the request, synchronize to the BIS by using information regarding a periodic advertisement indicating the BIS obtained according to the second scan.

For example, the request may be received through an add source operation of broadcast audio scan service (BASS).

For example, the information regarding the result of the second scan may include data regarding a periodic advertisement of an external electronic device operating as an audio source device for a broadcasting service.

For example, the information regarding the result of the second scan may be transmitted based on synchronizing to a periodic advertisement of an external electronic device operating as an audio source device for a broadcasting service discovered according to the second scan.

As described above, a method executed in a first electronic device (e.g., the first external electronic device 111) assisting a second electronic device (e.g., the electronic device 101) operating as an audio sink device and including a communication circuit (e.g., the communication circuit 202) for Bluetooth low energy (BLE) may comprise establishing, by using the communication circuit, a communication link between the first electronic device and the second electronic device, receiving an input to discover an audio source device providing a broadcasting service, executing, based on the input, by using the communication circuit, a first scan regarding an advertisement from an external electronic device around the first electronic device, transmitting, based on the input, by using the communication circuit, to the second electronic device through the communication link, a signal causing the second electronic device to execute a second scan regarding an advertisement from an external electronic device around the second electronic device, receiving, by using the communication circuit, from the second electronic device through the communication link, information regarding a result of the second scan executed by the second electronic device, and displaying, on a display, a user interface including a device list obtained according to a result of the first scan executed by the first electronic device and the result of the second scan executed by the second electronic device.

The electronic device according to various embodiments may be one of various types of electronic devices. The electronic devices may include, for example, a portable communication device (e.g., a smartphone), a computer device, a portable multimedia device, a portable medical device, a camera, a wearable device, or a home appliance. According to an embodiment of the disclosure, the electronic devices are not limited to those described above.

It should be appreciated that various embodiments of the present disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things unless the relevant context clearly indicates otherwise. As used herein, each of such phrases as "A or B," "at least one of A and B," "at least one of A or B," "A, B, or C," "at least one of A, B, and C," and "at least one of A, B, or C," may include any one of or all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," or "connected with" another element (e.g., a second element), it means that the element may be coupled with the other element directly (e.g., wiredly), wirelessly, or via a third element.

As used in connection with various embodiments of the disclosure, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an application-specific integrated circuit (ASIC).

Various embodiments as set forth herein may be implemented as software (e.g., the program 1540) including one or more instructions that are stored in a storage medium (e.g., internal memory 1536 or external memory 1538) that is readable by a machine (e.g., the electronic device 1501). For example, a processor (e.g., the processor 1520) of the machine (e.g., the electronic device 1501) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a compiler or a code executable by an interpreter. The machine-readable storage medium may be provided in the form of a non-transitory storage medium. Wherein, the term "non-transitory" simply means that the storage medium is a tangible device, and does not include a signal (e.g., an electromagnetic wave), but this term does not differentiate between a case in which data is semi-permanently stored in the storage medium and a case in which the data is temporarily stored in the storage medium.

According to an embodiment, a method according to various embodiments of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PlayStore^{™}), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to various embodiments, each component (e.g., a module or a program) of the above-described components may include a single entity or multiple entities, and some of the multiple entities may be separately disposed in different components. According to various embodiments, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

## Claims

1. A first electronic device comprising:
memory storing instructions;
a display;
a communication circuit for Bluetooth low energy (BLE); and
a processor,
wherein the instructions, when executed by the processor, cause the first electronic device to:
establish, using the communication circuit, a communication link between the first electronic device and a second electronic device;
receive an input to discover an audio source device that provides a broadcasting service,
based on the input:
execute, using the communication circuit, a first scan regarding an advertisement from an external electronic device around the first electronic device; and
transmit, through the communication link to the second electronic device, by using the communication circuit, a signal that causes the second electronic device to execute a second scan regarding an advertisement from an external electronic device around the second electronic device,
receive, through the communication link from the second electronic device, by using the communication circuit, information regarding a result of the second scan executed by the second electronic device, and
display, one the display, a user interface including a device list obtained in accordance with a result of the first scan that is executed by the first electronic device and the result of the second scan that is executed by the second electronic device.

2. The first electronic device of claim 1, wherein the instructions, when executed by the processor, further cause the first electronic device to:
receive a user input while displaying the device list by using the display;
based on receiving the user input for selecting as the audio source device an external electronic device in the device list that is discovered according to the second scan, transmit, by using the communication circuit, a request to synchronize to a broadcast isochronous stream (BIS) from the external electronic device that is selected by the user input, through the communication link to the second electronic device.

3. The first electronic device of claim 2, wherein the instructions, when executed by the processor, further cause the first electronic device to:
based on receiving the user input for selecting as the audio source device another external electronic device in the device list that is not discovered according to the second scan and is discovered according to the first scan, transmit, by using the communication circuit, information regarding a periodic advertisement of the other external electronic device obtained according to the first scan, through the communication link to the second electronic device.

4. The first electronic device of claim 3, wherein the information regarding the periodic advertisement of the other external electronic device is transmitted through an add source operation of broadcast audio scan service (BASS).

5. The first electronic device of claim 2, wherein the request to synchronize to the BIS from the external electronic device that is selected by the user input is transmitted through an add source operation of broadcast audio scan service (BASS).

6. The first electronic device of claim 1, wherein the instructions, when executed by the processor, further cause the first electronic device to:
display the device list in the user interface that includes at least one first executable object corresponding to at least one first external electronic device not discovered according to the second scan and discovered according to the first scan and at least one second executable object corresponding to at least one second external electronic device discovered according to the second scan, and
wherein the at least one second executable object is visually highlighted with respect to the at least one first executable object, in the device list.

7. The first electronic device of claim 1, wherein the instructions, when executed by the processor, further cause the first electronic device to:
obtain first data regarding reception signal strength measured by the first electronic device according to the first scan;
obtain, from the information received from the second electronic device, second data regarding reception signal strength measured by the second electronic device according to the second scan; and
obtain the device list by using the first data and the second data, and
wherein the first data and the second data are used for determining an executable object visually highlighted in the device list displayed by using the display.

8. The first electronic device of claim 1, wherein the signal is transmitted through a remote scan started operation of broadcast audio scan service (BASS).

9. The first electronic device of claim 1, wherein the information is received through a broadcast receive state of broadcast audio scan service (BASS).

10. A first electronic device comprising:
memory storing instructions;
a communication circuit for Bluetooth low energy (BLE); and
a processor,
wherein the instructions, when executed by the processor, cause the first electronic device to:
establish, by using the communication circuit, a communication link between the first electronic device and a second electronic device assisting the first electronic device;
receive, from the second electronic device through the communication link between the first electronic device and the second electronic device, by using the communication circuit, a signal informing a start of a first scan regarding an advertisement from an external electronic device around the second electronic device to discover, by the second electronic device, an audio source device providing a broadcasting service;
in response to the signal, execute, by using the communication circuit, a second scan regarding an advertisement from an external electronic device around the first electronic device; and
transmit information regarding a result of the second scan, by using the communication circuit through the communication link to the second electronic device.

11. The first electronic device of claim 10, wherein the instructions, when executed by the processor, further cause the first electronic device to:
in response to the signal, recognize that the first scan is being executed by the second electronic device.

12. The first electronic device of claim 10, wherein the signal is received through a remote scan started operation of broadcast audio scan service (BASS).

13. The first electronic device of claim 10, wherein the information regarding the result of the second scan is transmitted through a broadcast receive state of broadcast audio scan service (BASS).

14. The first electronic device of claim 10, wherein the instructions further cause the first electronic device to:
receive information regarding a periodic advertisement of an external electronic device that is not discovered according to the second scan and is discovered according to the first scan, through the communication link from the second electronic device by using the communication circuit.

15. The first electronic device of claim 14, wherein the information regarding the periodic advertisement of the external electronic device is received through an add source operation of broadcast audio scan service (BASS).
